# EUROPÄISCHE PATENTSCHRIFT

(11) **EP 0 674 786 B1**
(45) Veröffentlichungstag und Bekanntmachung des Hinweises auf die Patenterteilung: **19.03.1997**
(21) Anmeldenummer: 94902605.8
(22) Anmeldetag: 17.12.1993
(51) Int. Cl.: G06F 13/40

(54) **ANORDNUNG MIT STECKBAREN FUNKTIONSEINHEITEN**
ARRANGEMENT WITH PLUG-IN FUNCTIONAL UNITS
DISPOSITIF A UNITES FONCTIONNELLES ENFICHABLES

(30) Priorität: 21.12.1992 DE 4243347; 21.12.1992 DE 4243348
(43) Veröffentlichungstag der Anmeldung: 04.10.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEISGNERING, Franz, D-76275 Ettlingen (DE); PFATTEICHER, Werner, D-76327 Pfinztal (DE); SCHEWE, Franz-Clemens, D-76227 Karlsruhe (DE)
(86) Internationale Anmeldenummer: DE9301213
(87) Internationale Veröffentlichungsnummer: WO9415299

(56) Entgegenhaltungen:
- EP-A- 0 086 137
- EP-A- 0 347 484
- EDN ELECTRICAL DESIGN NEWS Bd. 26, Nr. 3 , Februar 1981 , NEWTON, MASSACHUSETTS US Seite 88 MACKINTOSH 'INTERROGATION TELLS uP WHICH BOARDS ARE PRESENT'
- PATENT ABSTRACTS OF JAPAN vol. 7, no. 73 (P-186)(1218) 25. März 1983 & JP,A,58 002 919 (ANRITSU DENKI KK) 8. Januar 1983
- IBM TECHNICAL DISCLOSURE BULLETIN. Bd. 12, Nr. 2 , Juli 1969 , NEW YORK US Seite 319 HOUDEK 'SELECTION SYSTEM'

## Beschreibung

Die Erfindung betrifft eine Anordnung gemäß dem Oberbegriff des Anspruchs 1.

In der deutschen Patentanmeldung P 42 39 030.3 ist eine Anordnung vorgeschlagen, in welcher eine zur Ausführung von Lese- und/oder Schreibzugriffen geeignete CPU-Einheit in jeden Steckplatz steckbar ist. Dazu ist die Anordnung versehen mit mehreren Steckplätzen, die über einen Daten- und Steuerleitungen aufweisenden Systembus miteinander verbunden sind, und mit an Verbindungsmittel der Steckplätze geführten Adreßleitungen, von denen jeweils eine an einen Auswahlanschluß eines Steckplatzes angeschlossen ist. Die CPU-Einheit weist Mittel zum Verbinden mit den Adreßleitungen auf, und jede der restlichen Funktionseinheiten ist mit Mitteln zum Verbinden mit dem Auswahlanschluß des Steckplatzes versehen. In dieser Anordnung kann die CPU-Einheit nicht erkennen, ob die Steckplätze mit Funktionseinheiten bestückt sind.

Aus der Druckschrift "EDN Electrical Design News", Bd. 26, Nr. 3, Februar 1981 (Mackintosh) ist ein Prozessor bekannt, welcher zur Erkennung der Position einer Einheit in einem Rack vorgesehen ist. Dazu führt der Prozessor dem für diese Einheit vorgesehenen Steckplatz eine dieser Einheit zugeordnete Adresse zu. Über den Datenbus erfolgt die Rückmeldung, ob diese Einheit in diesem Steckplatz gesteckt ist. Für jede Einheit ist eine Adresse vorgesehen, und es sind mehrere Zugriffe erforderlich, um für jede Einheit die Position im Rack zu ermitteln.

Aus der EP-A-0 324 144 ist ein Datenverarbeitungssystem mit einer Prozessoreinheit bekannt, welcher von peripheren Einheiten Ereignisse in Form von Unterbrechungssignalen zuführbar sind. Maßnahmen zur Erkennung von bestückten Steckplätzen sind nicht vorgesehen.

Der vorliegenden Erfindung liegt die Aufgabe zugrunde, eine Anordnung der eingangs genannten Art zu schaffen, in welcher die CPU-Einheit mit Funktionseinheiten bestückte Steckplätze erkennt.

Diese Aufgabe wird durch die im kennzeichnenden Teil des Anspruchs 1 angegebenen Maßnahmen gelöst.

Weitere Ausgestaltungen der Erfindung ergeben sich aus den Unteransprüchen.

Die erfindungsgemäße Anordnung wird insbesondere in einer speicherprogrammierbaren Steuerung eingesetzt, vorzugsweise in einer speicherprogrammierbaren Steuerung mit einem Zentralgerät und mindestens einem Erweiterungsgerät, die über ein verbindungskabel miteinander verbunden sind, welches den System- und Adreßbus, die Adreßleitungen und weitere Adreßleitungen zur Adressierung des Erweiterungsgerätes aufweist.

Anhand der Zeichnung, in der ein Ausführungsbeispiel der Erfindung veranschaulicht ist, wird die Erfindung näher erläutert.

Es zeigen
- Figur 1: ein prinzipschaltbild einer Anordnung mit Steckplätzen und
- Figur 2: Pegelumschaltmittel einer peripheren Einheit.

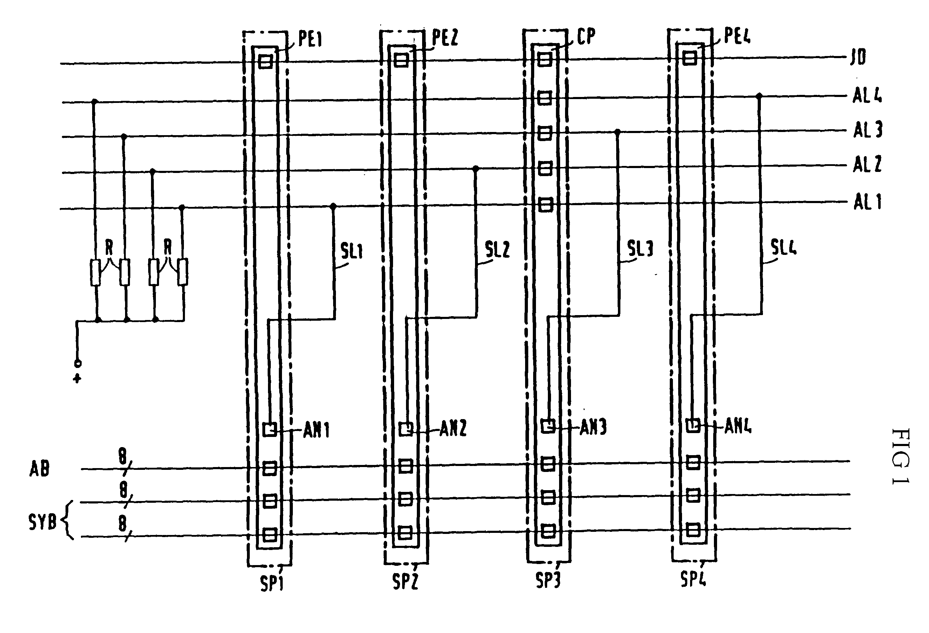

In Figur 1 sind mit SP1 ... SP4 Steckplätze bezeichnet, die über einen mehrere Daten- und Steuerleitungen aufweisenden Systembus SYB miteinander verbunden sind. In diesen Steckplätzen SP1 ... SP4 stecken periphere Einheiten PE1, PE2, PE4 und eine zur Ausführung von Lese- und/oder Schreibzugriffen geeignete CPU-Einheit CP, wozu die Steckplätze SP1 ... SP4 und die Einheiten entsprechende Verbindungsmittel, z. B. in Form von Feder- und Messerkontakten, aufweisen. Die Funktionseinheiten PE1, PE2 PE4 und die CPU-Einheit CP sind beliebig in die Steckplätze SP1 ... SP4 steckbar. Dazu sind die Einheiten PE1, PE2, PE4, CP mit Verbindungsmitteln zum Kontaktieren mit einer Steckplatz-Verbindungsleitung JD und mit Auswahlanschlüssen AN1, AN2, AN4 der Steckplätze SP1, SP2, SP4 und die CPU-Einheit CP mit zusätzlichen Verbindungsmitteln zum Kontaktieren mit Adreßleitungen AL1, AL2, AL3, AL4 versehen, die von Steckplatz zu Steckplatz geführt und jeweils über einen Widerstand R mit einem einem Pegel log. "1" entsprechenden Potential gelegt sind. In der Zeichnung sind die Verbindungen bzw. Anschlüsse in Form schwarzer Quadrate dargestellt. Die erste Adreßleitung AL1 ist über eine Leitung SL1 an den Auswahlanschluß AN1 des Steckplatzes SP1 angeschlossen. Entsprechend sind die Adreßleitungen AL2, AL3, AL4 über Leitungen SL2, SL3, SL4 mit den Auswahlanschlüssen AN2, AN3, AN4 der Steckplätze SP2, SP3, SP4 verbunden. Diese Adreßleitungen AL1 ... AL4 sind jeweils über einen Widerstand R an ein einer log. "1" entsprechendes Potential gelegt. Zur Adressierung der peripheren Einheiten PE1, PE2, PE4 erzeugt die CPU-Einheit CP ein Adreßsignal in Form einer log. "0", das über die Adreßleitungen AL1, AL2, AL4 und über die Leitungen SL1, SL2, SL4 den Auswahlanschlüssen AN1, AN2, AN4 zugeführt wird. Die CPU-Einheit CP wird über die Adreßleitung AL3, die Leitung SL3 und den Auswahlanschluß AN3 von weiteren zur Ausführung von Lese- und/oder Schreibzugriffen geeigneten, hier nicht dargestellten Einheiten adressiert.

Im folgenden wird die Funktions- und Wirkungsweise der Anordnung näher erläutert. Es ist angenommen, daß die periphere Einheit PE1 nicht gesteckt ist. Die CPU-Einheit CP beaufschlagt zyklisch oder während vorgebbarer Zeiten einer Zeitschaltung der CPU-Einheit CP die Steckplatz-Verbindungsleitung JD mit einem Steckplatz-Identifizierungssignal in Form eines Signals log. "1", das den Steckplätzen SP1, SP4 und somit hier nicht dargestellten Pegel-Umschaltmitteln der peripheren Einheiten PE2, PE4 zugeführt wird. Im vorliegenden Beispiel sind nur die peripheren Einheiten PE2 und PE4 gesteckt, wodurch deren Pegel-Umschaltmittel den Pegel der den Einheiten PE2, PE4 zugeordneten Adreßleitungen AL2, AL4 umschalten. Die CPU-Einheit CP erkennt aufgrund der Pegel der Adreßleitungen AL1, AL2, AL4, daß lediglich die peripheren Einheiten PE2, PE4 in den Steckplätzen SP2, SP4 gesteckt sind.

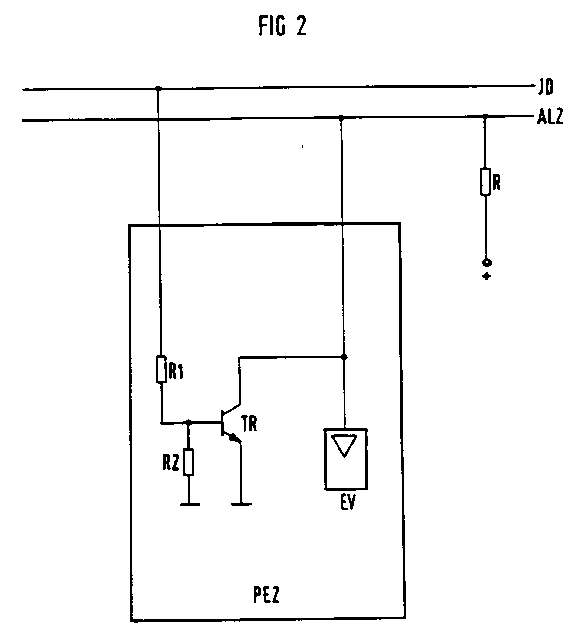

Die Funktions- und Wirkungsweise von Pegel-Umschaltmitteln wird anhand der Figur 2 verdeutlicht. Die in den Figuren 1 und 2 gleichen Teile sind mit gleichen Bezugszeichen versehen.

Die periphere Einheit PE2 weist Pegel-Umschaltmittel in Form eines mit Widerständen R1, R2 beschalteten Transistors TR auf, dessen Steueranschluß mit der Steckplatz-Verbindungsleitung JD verbunden ist. Der Kollektor des Transistors ist an den Verbindungspunkt eines Eingangsverstärkers EV mit der Adreßleitung AL2 geführt, und der Emitter ist an ein einem Pegel log. "0" entsprechendes Massepotential angeschlossen. Weitere Teile der peripheren Einheit PE2 sind für die Erfindung ohne Bedeutung und brauchen daher nicht erläutert werden. Führt die CPU-Einheit CP (Figur 1) dem Transistor TR über die Steckplatz-Verbindungsleitung JD das Steckplatz-Identifizierungssignal in Form einer log. "1" zu, so wird der Transistor TR leitend und verbindet die Adreßleitung AL2 mit dem Massepotential. Dadurch wird der Pegel auf der Adreßleitung AL2 von log. "1" auf log. "0" umgeschaltet. Für den Fall, daß die periphere Einheit PE2 im Steckplatz SP2 nicht gesteckt ist, wird der Pegel auf der Adreßleitung AL2 nicht verändert, da über den Widerstand R die Adreßleitung AL2 auf ein einer log. "1" entsprechendes Potential gelegt ist.

Im dargestellten Ausführungsbeispiel fragt die CPU-Einheit CP zyklisch oder nach vorgebbaren Zeiten einer Zeitüberwachungsschaltung der CPU-Einheit CP die Pegel der Adreßleitungen AL1, AL2, AL4 ab. Man kann auch in der Weise vorgehen, daß während eines Lesezugriffs der CPU-Einheit auf die peripheren Einheiten deren Pegel-Umschaltmittel zunächst den Pegel der jeweiligen Adreßleitung AL1, AL2, AL4 und anschließend den Pegel einer Quittungsanzeigeleitung umschalten. Der umgeschaltete Pegel auf der Quittungsanzeigeleitung zeigt der CPU-Einheit CP an, daß der Lesezugriff abgeschlossen ist. Die CPU-Einheit CP erkennt nach abgeschlossenem Lesezugriff sofort, auf welchen Adreßleitungen AL1, AL2, AL4 die Pegel umgeschaltet wurden, die darauf hinweisen, welche Plätze mit Funktionseinheiten bestückt sind. In diesem Fall ist die Quittungsanzeigeleitung an Verbindungsmittel der Steckplätze SP1, SP4 geführt, und die Einheiten PE1, PE2, PE4, CP weisen Verbindungsmittel zum Kontaktieren mit der Quittungsanzeigeleitung auf. Die Pegel-Umschaltmittel weisen außerdem einen weiteren Transistor auf, dessen Kollektor mit der Quittungsanzeigeleitung und dessen Emitter mit dem Massepotential verbunden ist. Dieser Transistor wird ebenfalls mit dem Steckplatz-Identifizierungssignal zeitverzögert angesteuert. Weiterhin ist es möglich, anstatt der Steckplatz-Verbindungsleitung JD zur Übertragung des Steckplatz-Identifizierungssignals eine der Steuer- oder Datenleitungen des Systembusses SYB vorzusehen, womit die Steckplatz-Verbindungsleitung nicht mehr erforderlich ist.

## Patentansprüche

1. Anordnung mit mehreren Steckplätzen (SP1, ...), die über einen Daten- und Steuerleitungen aufweisenden Systembus (SYB) und über einen Adreßbus (AB) miteinander verbunden sind und in die eine zur Ausführung von Lese- und/oder Schreibzugriffen geeignete CPU-Einheit (CP) und mehrere periphere Funktionseinheiten (PE1, PE2, PE4) gesteckt sind, wobei der CPU-Einheit (CP) mit Einheiten bestückte Steckplätze (SP1, ...) anzeigbar sind,
**dadurch gekennzeichnet,**
- daß die Anordnung Adreßleitungen (AL1, AL2, AL3, AL4) aufweist, wobei jeweils eine dieser Adreßleitungen (AL1, AL2, AL4) über eine zusätzliche Leitung (SL1, SL2, SL3, SL4) an einen Auswahlanschluß (AN1, AN2, AN3, AN4) eines Steckplatzes geführt ist,
- daß die peripheren Funktionseinheiten (PE1, PE2, PE4) und die CPU-Einheit (CP) mit Mitteln zum Anschluß an einen der Auswahlanschlüsse (AN1, AN2, AN3, AN4) und mit Mitteln zum Anschluß an eine Steckplatz-Verbindungsleitung (JD) versehen sind, über welche den peripheren Funktionseinheiten (PE1, PE2, PE4) durch die CPU-Einheit (CP) ein Steckplatz-Identifizierungssignalpegel zuführbar ist,
- daß die peripheren Funktionseinheiten (PE1, PE2, PE4) jeweils mit einem Pegelumschaltmittel versehen sind, wobei jedes Pegelumschaltmittel für den Fall, daß die periphere Funktionseinheit (PE1, PE2, PE4) einen Steckplatz-Identifizierungssignalpegel empfängt, den Pegel des dieser peripheren Funktionseinheit (PE1, PE2, PE4) zugehörigen Adreßsignals über den Auswahlanschluß umschaltet, wodurch der CPU-Einheit die Belegung dieses Steckplatzes angezeigt wird.

2. Anordnung nach Anspruch 1, **dadurch gekennzeichnet,**
- daß die CPU-Einheit (CP) den Steckplatz-Identifizierungssignalpegel zyklisch oder während vorgebbarer Zeiten den Pegelumschaltmitteln aufschaltet.

3. Speicherprogrammierbare Steuerung mit einer Anordnung nach Anspruch 1 oder 2.

4. Speicherprogrammierbare Steuerung mit einem jeweils eine Anordnung nach Anspruch 1 oder 2 aufweisenden Zentralgerät und mindestens einem Erweiterungsgerät, die über ein Verbindungskabel verbunden sind, welches den System- und einen Adreßbus (SYB, AB), die Adreßleitungen (AL1, ...) und weitere Adreßleitungen zur Adressierung des Erweiterungsgerätes aufweist.

5. Periphere Funktionseinheit (PE1, PE2, PE4), welche in einen der Steckplätze (SP1, ...) einer Anordnung nach Anspruch 1 oder 2 steckbar ist, **dadurch gekennzeichnet,** - daß die periphere Funktionseinheit (PE1, PE2, PE4) mit Mitteln zum Anschluß an den Auswahlanschluß (AN1, AN2, AN3, AN4) des jeweiligen Steckplatzes und mit Mitteln zum Anschluß an die Steckplatz-Verbindungsleitung (JD) versehen ist, über welche der peripheren Funktionseinheit (PE1, PE2, PE4) durch die CPU-Einheit (CP) der Steckplatz-Identifizierungssignalpegel zuführbar ist, - daß die periphere Funktionseinheit (PE1, PE2, PE4) mit einem Pegelumschaltmittel versehen ist, das für den Fall, daß die periphere Funktionseinheit (PE1, PE2, PE4) den Steckplatz-Identifizierungssignalpegel empfängt, den Pegel des dieser peripheren Funktionseinheit (PE1, PE2, PE4) zugehörigen Adreßsignals über den Auswahlanschluß (ANl, AN2, AN3, AN4) umschaltet, wodurch der CPU-Einheit die Belegung dieses Steckplatzes angezeigt wird.

## Claims

1. Arrangement having a plurality of plug-in stations (SP1, ...), which are connected to each other by way of a system bus (SYB) having data lines and control lines and by way of an address bus (AB) and into which are plugged a central processing unit (CP), which is suitable for carrying out read and/or write accesses, and a plurality of peripheral functional units (PE1, PE2, PE4), with it being possible to indicate to the central processing unit (CP) plug-in stations (SP1, ...) which are equipped with units,
characterised
- in that the arrangement has address lines (AL1, AL2, AL3, AL4,), with in each case one of these address lines (AL1, AL2, AL4) being routed by way of an additional line (SL1, SL2, SL3, SL4) to a selection terminal (AN1, AN2, AN3, AN4) of a plug-in station,
- in that the peripheral functional units (PE1, PE2, PE4) and the central processing unit (CP) are provided with means for connection to one of the selection terminals (AN1, AN2, AN3, AN4) and with means for connection to a plug-in station connection line (JD), by way of which a plug-in station identification-signal level can be supplied to the peripheral functional units (PE1, PE2, PE4) by the central processing unit (CP),
- in that the peripheral functional units (PE1, PE2, PE4) are each provided with a level-switching means, with each level-switching means, in the event that the peripheral functional unit (PE1, PE2, PE4) receives a plug-in station identification-signal level, switching over the level of the address signal allocated to this peripheral functional unit (PE1, PE2, PE4) by way of the selection terminal, as a result of which the assignment of this plug-in station is indicated to the central processing unit.

2. Arrangement according to claim 1,
characterised in that the central processing unit (CP) applies the plug-in station identification-signal level to the level-switching means cyclically or during predeterminable times.

3. Stored-program control having an arrangement according to claim 1 or 2.

4. Stored-program control having a central controller, which has in each case an arrangement according to claim 1 or 2 and at least one expansion unit, which are connected by way of a connection cable, which has the system bus (SYB) and an address bus (AB), the address lines (AL1,...) and further address lines for addressing the expansion unit.

5. Peripheral functional unit (PE1, PE2, PE4), which can be plugged into one of the plug-in stations (SP1,...) of an arrangement according to claim 1 or 2,
characterised
- in that the peripheral functional unit (PE1, PE2, PE4) is provided with means for connection to the selection terminal (AN1, AN2, AN3, AN4) of the respective plug-in station, and with means for connection to the plug-in station connection line (JD), by way of which the plug-in station identification-signal level can be supplied to the peripheral functional unit (PE1, PE2, PE4) by the central processing unit (CP),
- in that the peripheral functional unit (PE1, PE2, PE4) is provided with a level-switching means, which, in the event that the peripheral functional unit (PE1, PE2, PE4) receives the plug-in station identification-signal level, switches over the level of the address signal allocated to this peripheral functional unit (PE1, PE2, PE4) by way of the selection terminal (AN1, AN2, AN3, AN4), as a result of which the assignment of this plug-in station is indicated to the central processing unit.

## Revendications

1. Dispositif comportant plusieurs emplacements (SP1, ...) d'enfichage, qui sont reliés entre eux par l'intermédiaire d'un bus (SYB) de système comportant des conducteurs de données et des conducteurs de commande et par l'intermédiaire d'un bus (AB) d'adresse et dans lesquels sont enfichées les unités CPU (CP) appropriées pour l'exécution d'accès en lecture et/ou en écriture et plusieurs unités fonctionnelles périphériques (PE1, PE2, PE4), des emplacements (SP1, ...) d'enfichage équipés d'unités pouvant être indiqués à l'unité CPU (CP),
caractérisé en ce que
- le dispositif comporte des conducteurs d'adresse (AL1, AL2, AL3, AL4), chacun de ces conducteurs d'adresse (AL1, AL2, AL4) étant reliés à une borne de sélection (AN1, AN2, AN3, AN4) d'un emplacement d'enfichage par l'intermédiaire d'un conducteur supplémentaire (SL1, SL2, SL3, SL4),
- les unités fonctionnelles périphériques (PE1, PE2, PE4) et l'unité CPU (CP) sont munies de moyens de raccordement à l'une des bornes de sélection (AN1, AN2, AN3, AN4) et de moyens de raccordement à un conducteur (JD) de liaison d'emplacement d'enfichage, par l'intermédiaire duquel un niveau de signal d'identification d'emplacement d'enfichage peut être envoyé aux unités fonctionnelles périphériques (PE1, PE2, PE4) par l'unité CPU (CP),
- les unités fonctionnelles périphériques (PE1, PE2, PE4) sont munies chacune d'un moyen de commutation de niveau, chaque moyen de commutation de niveau commutant, dans le cas où l'unité fonctionnelle périphérique (PE1, PE2, PE4) reçoit un niveau de signal d'identification d'emplacement d'enfichage, le niveau du signal d'adresse associé à cette unité fonctionnelle périphérique (PE1, PE2, PE4) par l'intermédiaire de la borne de sélection, ce qui indique à l'unité (CP) l'occupation de cet emplacement d'enfichage.

2. Dispositif suivant la revendication 1, caractérisé en ce que
- l'unité CPU (CP) envoie aux moyens de commutation de niveau le niveau de signal d'identification d'emplacement d'enfichage cycliquement ou pendant des temps pouvant être prescrits.

3. Commande par programme enregistré comportant un dispositif suivant la revendication 1 ou 2.

4. Commande par programme enregistré comportant un appareil central comportant un dispositif suivant la revendication 1 ou 2 et au moins un appareil d'extension, qui est relié par l'intermédiaire d'un câble de liaison lequel comporte le bus de système et un bus d'adresse (SYB, AB), les conducteurs d'adresse (AL1, ...) et d'autres conducteurs d'adresse pour l'adressage de l'appareil d'extension.

5. Unité fonctionnelle périphérique (PE1, PE2, PE4), qui peut être enfichée dans l'un des emplacements (SP1, ...) d'enfichage d'un dispositif suivant la revendication 1 ou 2,
caractérisée en ce que
- l'unité fonctionnelle périphérique (PE1, PE2, PE4) est munie de moyens de raccordement à la borne (AN1, AN2, AN3, AN4) de sélection de l'emplacement d'enfichage respectif et de moyens de raccordement au conducteur (JD) de liaison d'emplacement d'enfichage, par l'intermédiaire duquel le niveau de signal d'identification d'emplacement d'enfichage peut être envoyé à l'unité fonctionnelle périphérique (PE1, PE2, PE4) par l'unité CPU (CP),
- l'unité fonctionnelle périphérique (PE1, PE2, PE4) est munie d'un moyen de commutation de niveau, qui commute, dans le cas où l'unité fonctionnelle périphérique (PE1, PE2, PE4) reçoit le niveau de signal d'identification d'emplacement d'enfichage, le niveau du signal d'adresse associé à cette unité fonctionnelle périphérique (PE1, PE2, PE4) par l'intermédiaire de la borne de sélection (AN1, AN2, AN3, AN4), ce qui indique à l'unité CPU l'occupation de cet emplacement d'enfichage.
